# EUROPEAN PATENT SPECIFICATION

(11) **EP 4 016 276 B1**
(45) Date of publication and mention of the grant of the patent: **26.02.2025**
(21) Application number: 20852903.2
(22) Date of filing: 27.07.2020
(51) Int. Cl.: G06F 3/06, G06F 16/174

(54) **DATA DEDUPLICATION METHOD AND APPARATUS**
DATENENTDUPLIZIERUNGSVERFAHREN UND -VORRICHTUNG
PROCÉDÉ ET APPAREIL DE DÉDUPLICATION DE DONNÉES

(30) Priority: 14.08.2019 CN 201910748958
(43) Date of publication of application: 22.06.2022
(73) Proprietor: Huawei Technologies Co., Ltd., Longgang District Shenzhen, Guangdong 518129 (CN)
(72) Inventor: REN, Ren, Shenzhen, Guangdong 518129 (CN); WANG, Chen, Shenzhen, Guangdong 518129 (CN); GUO, Pingjing, Shenzhen, Guangdong 518129 (CN)
(74) Representative: Maiwald GmbH
(86) International application number: PCT/CN2020/104846
(87) International publication number: WO 2021/027541

(56) References cited:
- CN-A- 102 831 222
- CN-A- 102 915 278
- CN-A- 106 990 914
- CN-A- 110 618 789
- US-A1- 2011 131 390
- US-A1- 2013 086 006
- US-A1- 2014 325 147
- US-A1- 2015 046 409
- US-A1- 2015 199 270
- US-A1- 2019 073 151

## Description

### TECHNICAL FIELD

This application relates to the field of storage technologies, and in particular to a deduplication method and apparatus.

### BACKGROUND

With development of technologies, more data needs to be stored by using a storage system. To save storage space of the storage system, a deduplication technology is proposed. To be specific, if a plurality of copies of a specific piece of data are stored in the storage system, the plurality of copies of the data are deleted and only one copy of the data is saved, so that an objective of reducing storage space occupied by the data is achieved by reducing the data.

Currently, an implementation process of one deduplication technology is as follows: first, calculating a fingerprint of each piece of data, storing the data, and recording a mapping between the fingerprint and a storage address of the data; performing bulk deduplication on the stored data as to-be-deduplicated data. The bulk deduplication on the stored duplicated data includes: querying whether the stored data has a same fingerprint in a fingerprint table, determining that the data is duplicated data if the stored data has a same fingerprint in the fingerprint table, and determining that the data is unique data if the stored data does not have a same fingerprint in the fingerprint table; and deleting the mapping between the fingerprint of the data and the storage address. It can be learned that in the current deduplication technology, fingerprints of all to-be-duplicated data in the fingerprint table need to be searched for, to determine whether the data is duplicated data, resulting in low deduplication efficiency.
United States patent application US 2019/073151 A1 discloses techniques for implementing content-based post-process data deduplication.
United States patent application US 2015/046409 A1 discloses a storage server configured to merge entries in a changelog with entries in a primary datastore to identify duplicate data blocks in the storage device and to free the identified duplicate data blocks in the storage device.
United States patent application US 2013/086006 A1 discloses a method for removing duplicate data blocks at a fine-granularity from a storage array.

### SUMMARY

This application provides a deduplication method and apparatus, to improve efficiency of a deduplication technology.

The invention is set out in the appended set of claims.

### BRIEF DESCRIPTION OF DRAWINGS

FIG. 1 is a diagram of an architecture of an example of a storage system according to an embodiment of this application;
FIG. 2A and FIG. 2B are a flowchart of a deduplication method according to an embodiment of this application;
FIG. 3(a) to FIG. 3(c) are schematic diagrams of examples of a fingerprint record before and after deduplication is performed according to an embodiment of this application;
FIG. 4(a) to FIG. 5(b) are schematic diagrams of another example of fingerprint records before and after deduplication is performed according to an embodiment of this application;
FIG. 6(a) to FIG. 10(b) are schematic diagrams of examples in which fingerprint record items are deleted based on stubs of fingerprints according to an embodiment of this application;
FIG. 11 is a diagram of a structure of an example of a deduplication apparatus according to an embodiment of this application; and
FIG. 12 is a diagram of a structure of another example of a deduplication apparatus according to an embodiment of this application.

### DESCRIPTION OF EMBODIMENTS

To make objectives, technical solutions, and advantages of embodiments of this application clearer, the following further describes the embodiments of this application in detail with reference to the accompanying drawings.

The following describes technical terms in this application, to facilitate a person skilled in the art to understand the technical solutions of this application.
(1) A deduplication technology may include an inline deduplication mode and a post-process deduplication mode based on a moment at which deduplication is performed. The inline deduplication mode means that deduplication is performed before data in a cache of a storage system is stored in a storage device, and then data obtained after the deduplication is performed is stored in the storage device. The post-process deduplication mode means that after a fingerprint of the data in the cache is calculated and the data in the cache is stored in the storage device, a mapping between the fingerprint of the data and a storage address is recorded, the mapping is read in a preset time period (for example, when the storage system is idle), deduplication is performed on the data based on the fingerprint in the mapping, and the data after the deduplication is performed is stored in a deduplication area of the storage device. It should be noted that the technical solutions in this embodiment of this application are an improvement of the post-process deduplication mode.
(2) A fingerprint table is used to record a mapping between a fingerprint of unique data obtained after deduplication and a storage address of the unique data in a deduplication area. The deduplication area is a storage area, in the storage system, for storing the unique data obtained after the deduplication.
(3) In the embodiments of this application, "a plurality of" means two or more. In view of this, in the embodiments of this application, "a plurality of" may also be understood as "at least two". "At least one" may be understood as one or more, for example, understood as one, two, or more. For example, "including at least one" means including one, two, or more, and does not limit which is included. For example, "including at least one of A, B, and C" may represent the following cases: A is included, B is included, C is included, A and B are included, A and C are included, B and C are included, or A, B, and C are included. The term "and/or" describes an association relationship for describing associated objects and represents that three relationships may exist. For example, A and/or B may represent the following three cases: Only A exists, both A and B exist, and only B exists. In addition, unless otherwise specified, the character "/" usually indicates an "or" relationship between the associated objects.

Unless otherwise stated, in the embodiments of this application, ordinal numbers such as "first" and "second" are intended to distinguish between a plurality of objects, and not intended to limit a sequence, a time sequence, a priority, or importance of the plurality of objects.

The following describes the deduplication method according to the embodiments of this application with reference to the accompanying drawings.

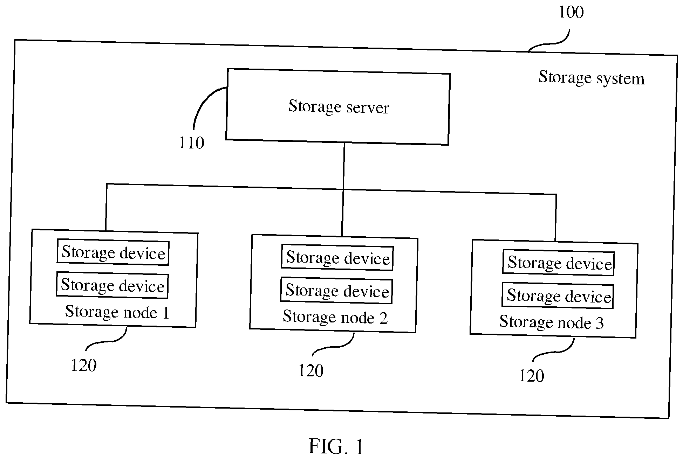

FIG. 1 is a diagram of an architecture of an example of a storage system to which a method in an embodiment of this application is applicable. In FIG. 1, the storage system is used as an example of a distributed storage system.

In FIG. 1, the storage system 100 includes one server 110 and three storage nodes 120 (storage node 1 to storage node 3), and each storage node 120 includes at least one storage device. For example, the storage device may include a serial advanced technology attachment (SATA) hard disk, a small computer system interface (SCSI) hard disk, a serial attached SCSI (SAS) hard disk, a fibre channel (FC) hard disk, a mechanical hard disk drive (hard disk drive, HDD), and a solid state drive (solid state drive, SSD), and the like.

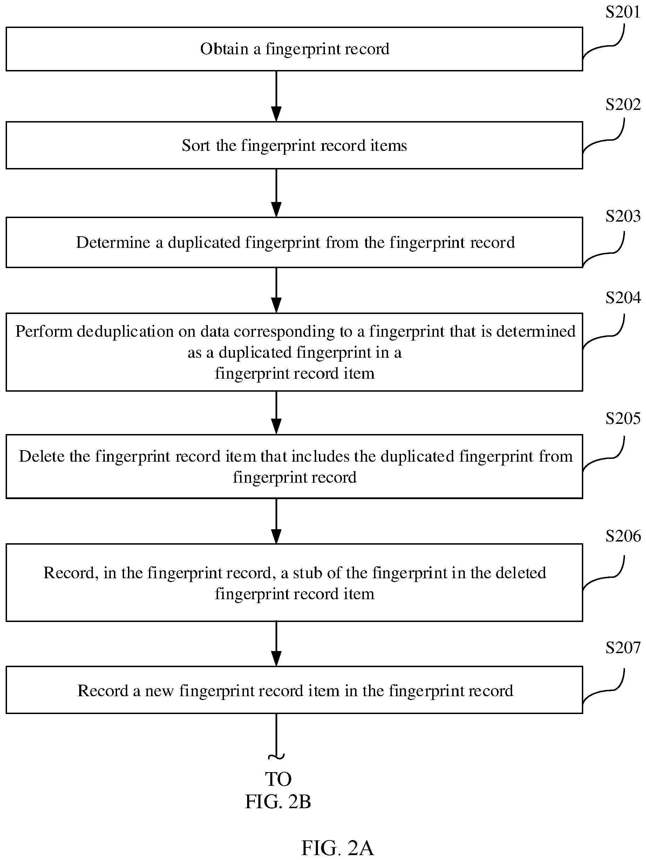

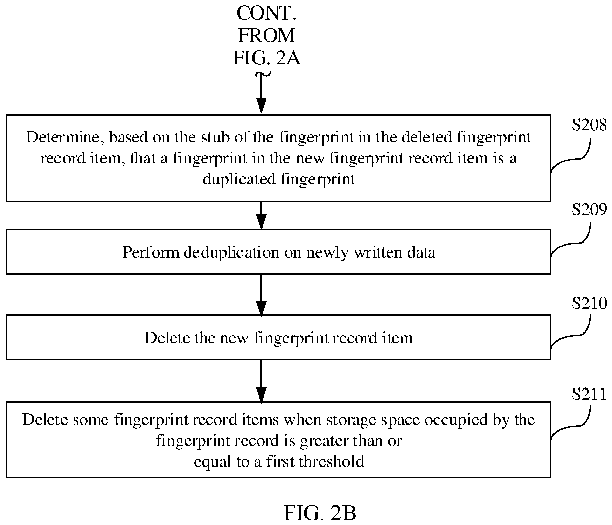

FIG. 2A and FIG. 2B are a flowchart of a deduplication method. In the following description, that the method is applied to the storage system shown in FIG. 1 is used as an example for description. The flowchart is described as follows:
S201: The storage system obtains a fingerprint record.

Each fingerprint record item includes a mapping between a fingerprint and a storage address of data corresponding to the fingerprint. During post-process deduplication, the storage system receives data, calculates a fingerprint of the data, stores the data, generates a fingerprint record item, and performs deduplication on the stored data in a preset time period (for example, when the storage system is idle). The fingerprint record item includes a mapping between the fingerprint of the data and a storage address of the data.

In a specific implementation, the fingerprint record may be recorded in the form of a log, or the fingerprint record may be recorded in the form of an entry. This is not limited in this embodiment of this application.

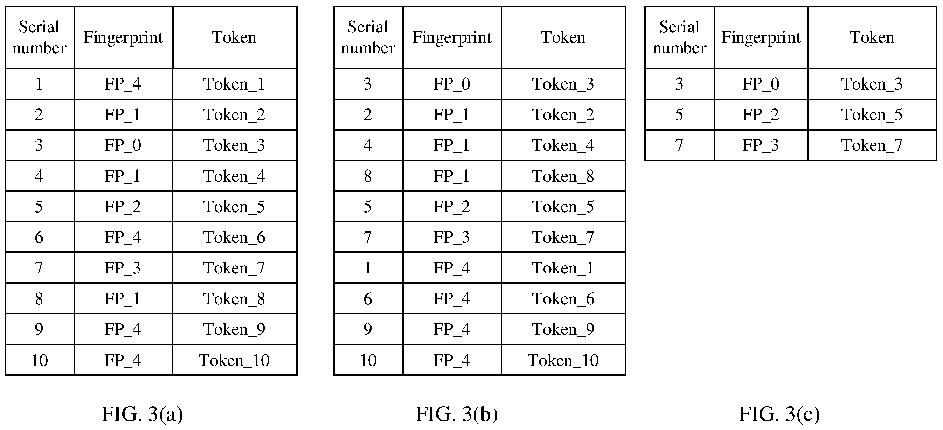

In an example, as shown in FIG. 3(a) to FIG. 3(c), it is assumed that the storage system stores 10 pieces of data, and the fingerprint record includes fingerprint record items of the 10 pieces of data, as shown in FIG. 3(a). In FIG. 3(a), the fingerprint record items corresponding to the data each include three parts: a serial number, a fingerprint (fingerprint, FP), and a token (token). The serial numbers may indicate a generation sequence of the fingerprint record items, and the tokens may indicate information such as storage addresses of the data. In this embodiment of this application, the serial numbers in the fingerprint record items are implemented as an example, and are used to indicate a sequence of the fingerprint record items. In another implementation, the serial numbers may be not used, and the fingerprint record items are sorted based on generation times of the fingerprint record items.

It should be noted that in a scenario in which the storage system is a distributed storage system, that the storage system obtains a fingerprint record specifically means that a server of the storage system obtains a fingerprint record. When the storage system is in another scenario, the fingerprint record may be obtained by another apparatus or device. For example, in a scenario in which the storage system is a storage array, that the storage system obtains a fingerprint record specifically means that an array controller of the storage array obtains a fingerprint record.

S202: The storage system sorts the fingerprint record items.

Specifically, the storage system may sort the fingerprint record items in the fingerprint record in an ascending order of FPs in the fingerprint record items. In this way, the fingerprint record items with a same fingerprint are arranged together. For example, in FIG. 3(a), there are five different fingerprints, namely, FP_0 to FP_4, including three FP_1 and four FP_4. After sorting is performed in the ascending order of the FPs, a fingerprint record shown in FIG. 3(b) is obtained.

S203: The storage system determines a duplicated fingerprint from the fingerprint record.

The storage system determines the duplicated fingerprint from the fingerprint record based on a threshold of the duplicated fingerprint. In this way, the storage system determines, based on the fingerprint record after sorting, whether a quantity of times that the fingerprint record items that include a same fingerprint occur is greater than or equal to the threshold, and if the quantity of times is greater than the threshold, the storage system determines that the fingerprint is a duplicated fingerprint.

If a fingerprint is a duplicated fingerprint, it indicates that data stored in storage addresses in the fingerprint record items that include the same fingerprint is duplicated data.

In an example, the threshold may be 3. In the fingerprint record shown in FIG. 3(b), three fingerprint record items include FP_1, and four fingerprint record items include FP_4, so that it is determined that FP_1 and FP_4 are duplicated fingerprints.

S204: The storage system performs deduplication on data corresponding to a fingerprint that is determined as a duplicated fingerprint in a fingerprint record item.

The fingerprint record shown in FIG. 3(b) is still used as an example for description, and FP_1 and FP_4 are duplicated fingerprints. To be specific, in the fingerprint record, there are three FP_1, that is, fingerprints of three pieces of data are all FP_1; and there are four FP_4, that is, fingerprints of four pieces of data are all FP_4. Deduplication is performed on data respectively corresponding to FP_1 and FP_4. In an aspect, the data respectively corresponding to FP_1 and FP_4 in the fingerprint record is already duplicated data. When a fingerprint table is queried by using the data respectively corresponding to FP_1 and FP_4, even if the data respectively corresponding to FP_1 and FP_4 cannot be found in the fingerprint table, deduplication may still be performed on the data respectively corresponding to FP_1 and FP_4 in the fingerprint record. This may improve deduplication efficiency. In a specific implementation, when the fingerprint FP_1 is found in the fingerprint table, it indicates that unique data corresponding to the fingerprint FP_1 has been stored in the storage system. The fingerprint table records a mapping between the fingerprint FP_1 and a storage address of the unique data corresponding to the fingerprint FP_1. Therefore, the data corresponding to FP_1 in the fingerprint record does not need to be stored, and only a mapping between a host access address of the data corresponding to FP_1 in the fingerprint record and the fingerprint FP_1 in the fingerprint table needs to be established. When the fingerprint FP_4 cannot be found in the fingerprint table, it indicates that unique data corresponding to the fingerprint FP_4 is not stored in the storage system. A fingerprint record item is selected from the fingerprint record items including the fingerprint FP_4 in the fingerprint record. Data in a storage address corresponding to the fingerprint FP_4 in this fingerprint record is read. The data is stored in a deduplication area, to obtain a new storage address of the data. A mapping between the fingerprint FP_4 and the new storage address is established in the fingerprint table.

S205: The storage system deletes the fingerprint record item that includes the duplicated fingerprint from the fingerprint record.

In an example, the fingerprint record item that includes the duplicated fingerprint is deleted from the fingerprint record. For example, after the fingerprint record items that include FP_1 and FP_4 are deleted, a fingerprint record shown in FIG. 3(c) is obtained. Because the fingerprints in the other fingerprint record items are not duplicated fingerprints, these fingerprint record items continue to be stored in the fingerprint record.

In the foregoing description, deduplication is performed on data, whose repetition times reach the threshold, of a fingerprint in the fingerprint record, so that a deduplication rate of the storage system is improved. However, if the fingerprint record items that include the fingerprints corresponding to the data are deleted from the fingerprint record after the deduplication, when data corresponding to the fingerprints are written into the storage system, deduplication cannot be performed on the newly written data because the fingerprint record does not include the fingerprint record items that include the fingerprints and the repetition times of the fingerprints corresponding to the newly written data cannot reach the threshold. To resolve this problem, this embodiment of this application further includes:

S206: The storage system records, in the fingerprint record, a stub of the fingerprint in the deleted fingerprint record item.

In this embodiment of this application, the stub of the fingerprint in the deleted fingerprint record item is used to indicate that the fingerprint in the deleted fingerprint record item is a duplicated fingerprint.

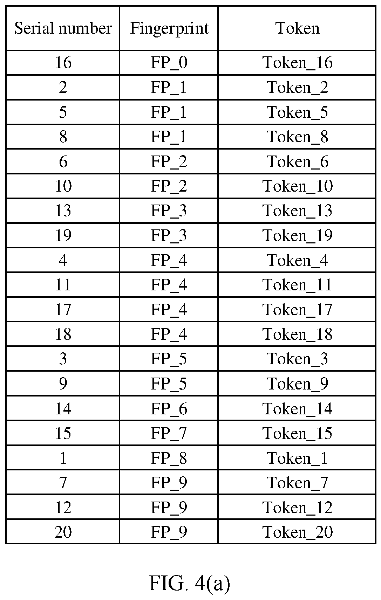

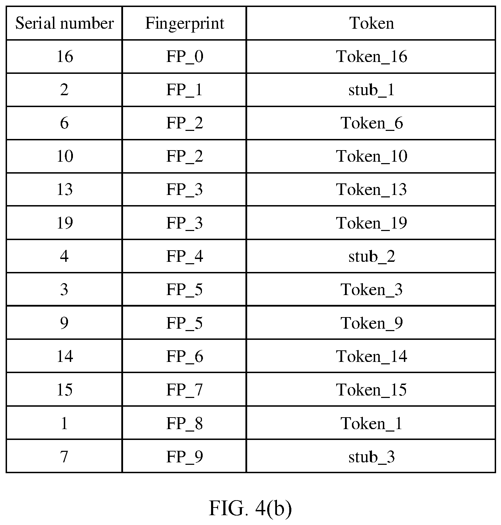

Specifically, in the fingerprint record shown in FIG. 4(a), there are three duplicated fingerprints, namely, FP_1, FP_4, and FP_9. In this case, stubs corresponding to the three duplicated fingerprints are separately added to the fingerprint record, namely, a stub of FP_1, a stub of FP_4, and a stub of FP_9, to obtain a fingerprint record shown in FIG. 4(b). In FIG. 4(b), the stub of each fingerprint may be used as a record item, and information in a token is changed into stub to indicate that the record item is a stub of a fingerprint. A token of a record item corresponding to FP_1 may be marked as stub_1, a token of a record item corresponding to FP_4 may be marked as stub_2, and a token of a record item corresponding to FP_9 may be marked as stub_3.

S207: The storage system records a new fingerprint record item in the fingerprint record.

In this embodiment of this application, the new fingerprint record item includes the fingerprint FP_1 and a new storage address of data corresponding to the FP_1, and the data corresponding to the fingerprint FP_1 in the new fingerprint record item is newly written data.

The storage system receives new data, calculates a fingerprint of the new data, stores the new data, and generates a fingerprint record item corresponding to the new data.

S208: The storage system determines, based on the stub of the fingerprint in the deleted fingerprint record item, that the fingerprint in the new fingerprint record item is a duplicated fingerprint.

After the new fingerprint record item is recorded in the fingerprint record, the new fingerprint record item is compared with a stub in the fingerprint record, to determine whether the fingerprint in the new fingerprint record item is the same as a fingerprint corresponding to the stub; if the fingerprint in the new fingerprint record item is the same as the fingerprint corresponding to the stub, it is determined that the fingerprint in the new fingerprint record item is a duplicated fingerprint; or if the fingerprint in the new fingerprint record item is not the same as the fingerprint corresponding to the stub, the fingerprint is not a duplicated fingerprint. Accordingly, deduplication is performed until the repetition times of the fingerprint reaches the threshold.

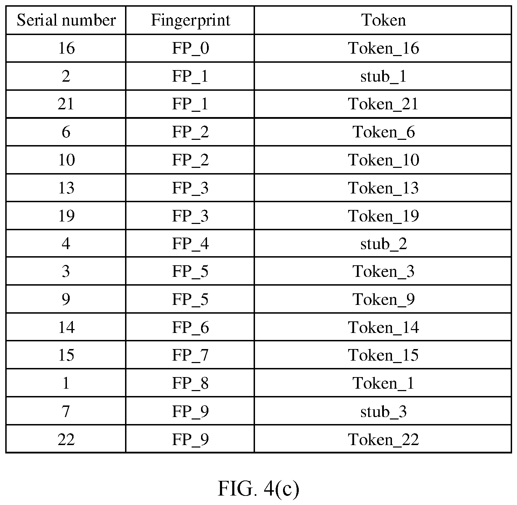

In an example, in a fingerprint record in FIG. 4(c), the fingerprint of the new data recorded in the new fingerprint record item is FP_1 that is the same as the fingerprint corresponding to the stub of the fingerprint FP_1. Therefore, the fingerprint of the new data is a duplicated fingerprint.

In this way, after the new data is stored in the storage system, the fingerprint corresponding to the new data may be compared with the stub. If the fingerprint corresponding to the new data is the same as the fingerprint indicated by the stub, deduplication may be performed on the new data without waiting for repetition times of the fingerprint corresponding to the new data to reach the threshold. This can improve efficiency of a deduplication technology.

S209: The storage system performs deduplication on the newly written data.

If the fingerprint of the new data is a duplicated fingerprint, it indicates that the data has been stored in the storage device, so that deduplication can be directly performed on the new data.

It should be noted that when deduplication is performed on the newly written data, because the fingerprint table already stores the fingerprint, a mapping between a host access address of the new data and the fingerprint FP_1 may be directly established without querying the fingerprint table. Therefore, a delay of deduplication can be reduced.

S210: The storage system deletes the new fingerprint record item.

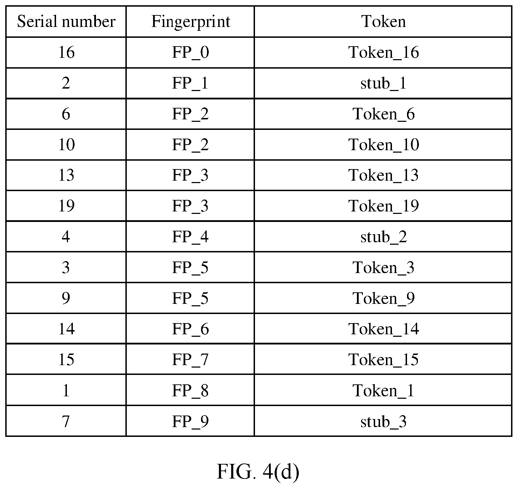

After deduplication is performed on the newly written service data, the new fingerprint record item corresponding to the new data is deleted from the fingerprint record, to obtain a fingerprint record shown in FIG. 4(d). Deleting an invalid fingerprint record can reduce storage space occupied by the fingerprint record, so that utilization of the storage space can be improved.

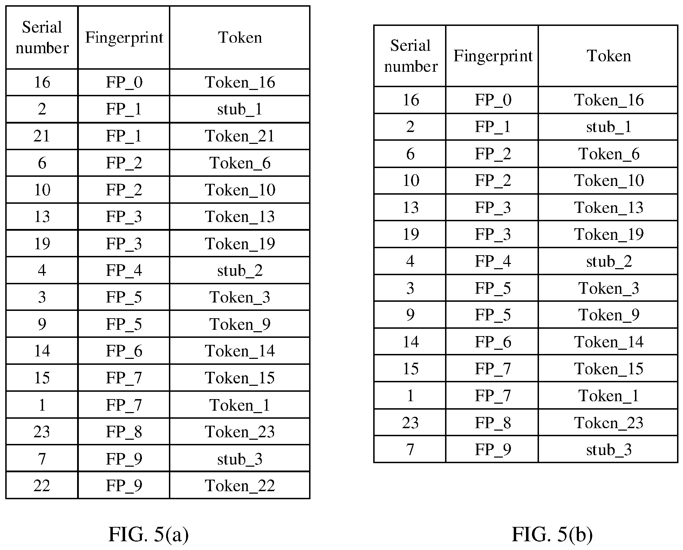

It should be noted that the new data may be different from data already stored in the storage system. For example, the new data further includes data 23, a fingerprint FP_8 of the data 23 is obtained through calculation, a token corresponding to the service data 23 is a token_23, and a fingerprint record shown in FIG. 5(a) is obtained. Because a fingerprint record item corresponding to the service data 23 includes FP_8 that is different from a fingerprint in any fingerprint record item in the fingerprint record, the fingerprint included in the fingerprint record item corresponding to the service data 23 is not a duplicated fingerprint. Therefore, deduplication is not performed on the service data 23, and the fingerprint record item corresponding to the service data 23 is not deleted, to obtain a fingerprint record shown in FIG. 5(b).

S211: The storage system deletes some fingerprint record items when the storage space occupied by the fingerprint record is greater than or equal to a first threshold.

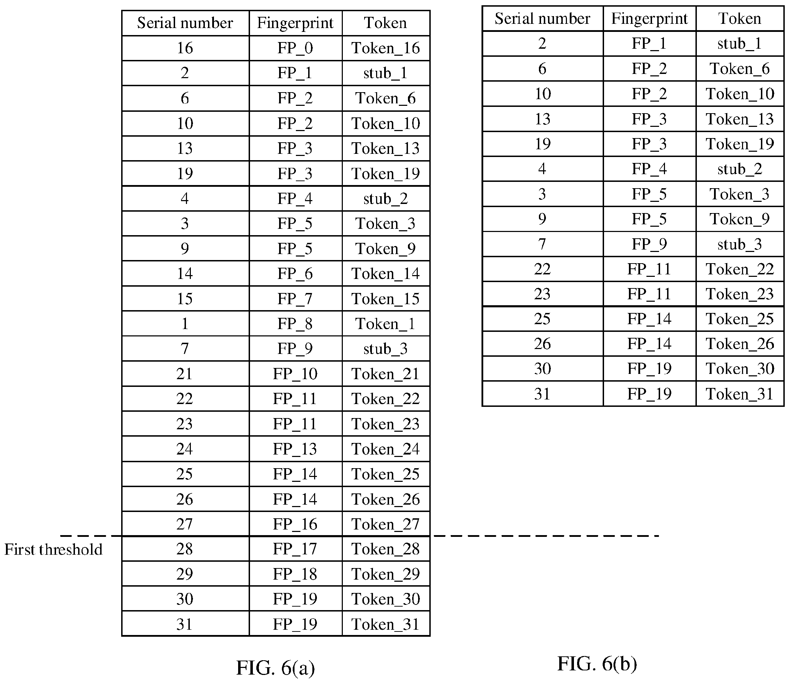

In this embodiment of this application, the fingerprint record is stored in a deduplication metadata space. Because the deduplication metadata space is limited, as more data is written into the storage system, the storage space occupied by the fingerprint record may exceed the first threshold, where the first threshold may be, for example, 80% or 70% of a maximum value of the deduplication metadata space. If the storage space occupied by the fingerprint record exceeds the first threshold, as shown in FIG. 6(a), some fingerprint record items in the fingerprint record need to be deleted, or it may be understood that some fingerprint record items may be eliminated. It should be noted that eliminating or deleting a fingerprint record item means that only the fingerprint record item is processed, but data corresponding to the fingerprint record item does not need to be processed.

In this embodiment of this application, the deleting some fingerprint record items may include but is not limited to the following three manners.

### Manner 1:

Delete a third fingerprint record item. A fingerprint included in the third fingerprint record item is different from fingerprints included in other fingerprint record items in the fingerprint record. That is, a fingerprint record item that occurs once in the fingerprint record is deleted.

If a fingerprint record item occurs once within this time period, it indicates that a probability of repeatedly storing data corresponding to the fingerprint is small, and the fingerprint record item needs to wait for a longer time before deduplication can be performed. Therefore, the fingerprint record item may be directly deleted, to reduce the storage space occupied by the fingerprint record.

In an example, in FIG. 6(a), if fingerprint record items corresponding to FP_0, FP_6, FP_7, FP_8, FP_10, and the like are all fingerprint record items corresponding to the fingerprint that occur once, the fingerprint record items corresponding to these fingerprints may be deleted, to obtain a fingerprint record shown in FIG. 6(b).

### Manner 2:

Delete a fourth fingerprint record item. Duration of storing the fourth fingerprint record item in the fingerprint record is greater than or equal to a second threshold. That is, a fingerprint record item with an earlier write time is deleted from the fingerprint record.

Because an earlier time of writing a fingerprint record item into the fingerprint record indicates that data corresponding to the fingerprint record item is more likely to be overwritten with new data, if the data has been overwritten, the data will not be repeatedly stored in the storage system, and there is no need to perform deduplication on the data. Therefore, a fingerprint record item written into the fingerprint record early may be deleted, to reduce the storage space occupied by the fingerprint record.

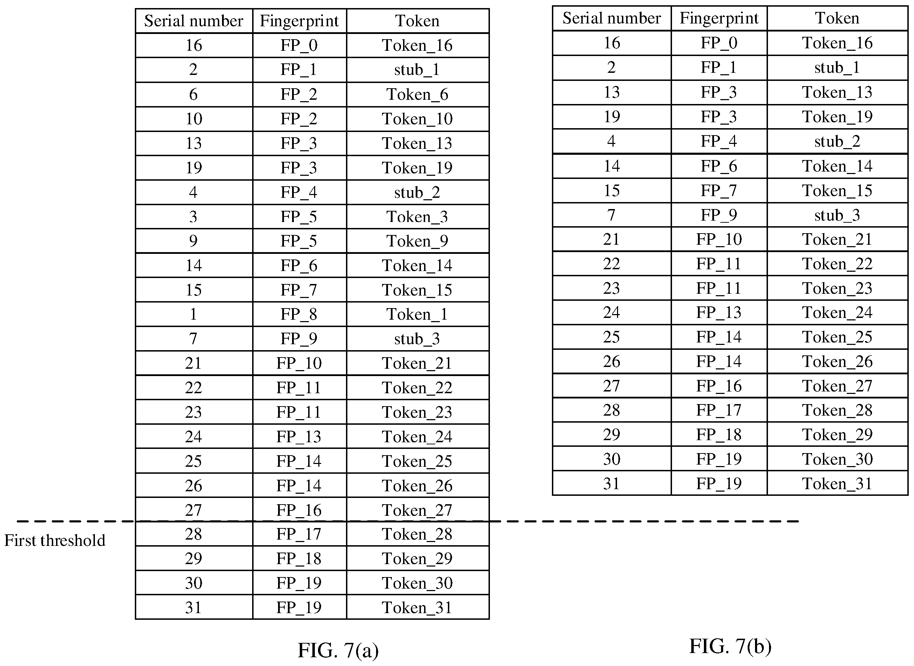

In an example, if data is written into the storage system in sequence, a smaller storage address of the data indicates a longer storage time of the data in the storage system. Accordingly, a fingerprint record item corresponding to the data is stored for a longer time in the fingerprint record. Therefore, duration of storing a fingerprint record item in the fingerprint record may be determined based on a value of a token. The second threshold may be a difference between maximum values of tokens in fingerprint record items, and the difference may be 20, 15, or the like. For example, the difference is 20. In FIG. 7(a), if a maximum value of the tokens is 31 and the difference is 20, the fingerprint record items whose values of the tokens are 1 to 11 are deleted, to obtain a fingerprint record shown in FIG. 7(b).

### Manner 3:

Delete a fifth fingerprint record item in a fingerprint record table. The fingerprint record does not record a predetermined quantity of fifth fingerprint record items within a predetermined time period. That is, a fingerprint record item that occurs less frequently in the fingerprint record is deleted.

If a fingerprint record item occurs less frequently within a predetermined time period, it indicates that a probability of repeatedly storing data corresponding to the fingerprint is small. Therefore, the fingerprint record item may be directly deleted, to reduce the storage space occupied by the fingerprint record.

In an example, the predetermined quantity may be 1 (or 2), that is, a fingerprint record item corresponding to a fingerprint whose quantity of occurrences is less than or equal to 1 (or 2) in the fingerprint record is deleted. When the value of the predetermined quantity is 1, a result in this manner is the same as that in Manner 1. When the value of the predetermined quantity is 2, for a specific process of this manner, refer to the first manner. Details are not described herein again.

### Manner 4:

If a stub of a second fingerprint is recorded in the fingerprint record, and the stub of the second fingerprint is used to indicate that the second fingerprint is a duplicated fingerprint, it is determined whether the fingerprint record records a predetermined quantity of third fingerprint record items that include the second fingerprint within a predetermined time period. If the fingerprint record does not record the second predetermined quantity of third fingerprint record items within the predetermined time period, the stub of the second fingerprint in the fingerprint record is deleted.

If after a stub of a fingerprint is recorded in the fingerprint record, fewer fingerprint record items corresponding to the fingerprint are subsequently recorded in the fingerprint record, it indicates that a quantity of times a duplicated fingerprint is determined by using the stub of the fingerprint is small, that is, the stub of the fingerprint contributes less to determining the duplicated fingerprint, so that the stub of the fingerprint can be deleted, to reduce the storage space occupied by the fingerprint record.

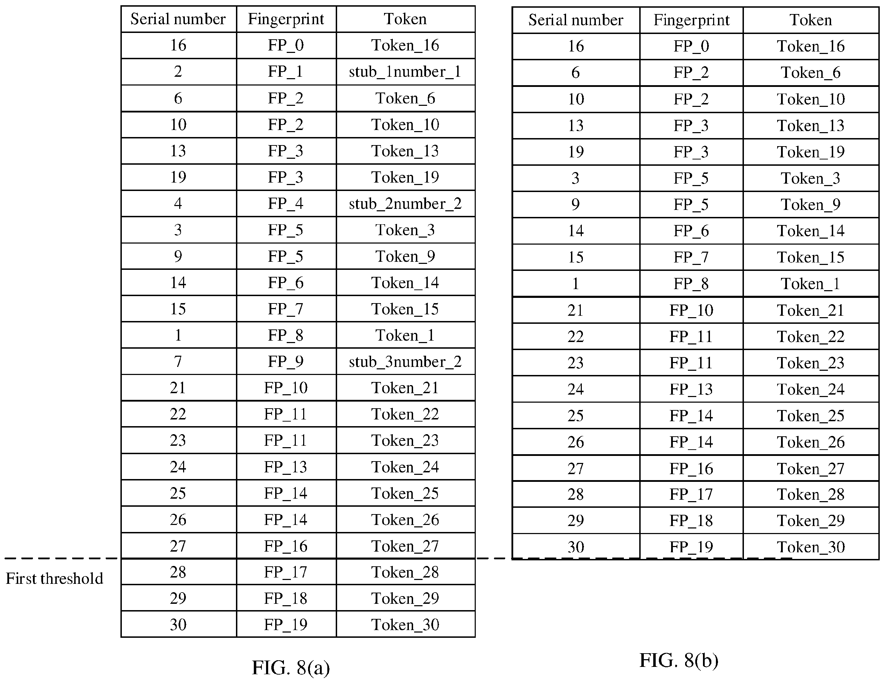

In an example, a quantity of fingerprints corresponding to a stub within a preset time period may be recorded in a record item corresponding to the stub of the fingerprints. For example, if a number parameter is added to a token, and a value of the number parameter is the quantity of fingerprints corresponding to the stub in the preset time period, for example, the value of the number parameter is 3, it indicates that the fingerprint record item including the fingerprints corresponding to the stub is recorded for three times in the preset time period, as shown in FIG. 8(a). It should be noted that the value of the number parameter is reset at an interval of the preset time period, and the preset time period may be 5s, 10s, or the like. If the predetermined quantity is 3, if a serial number carried after a number in a record item corresponding to a stub is less than 3, the record item corresponding to the stub may be deleted, to obtain a fingerprint record shown in FIG. 8(b).

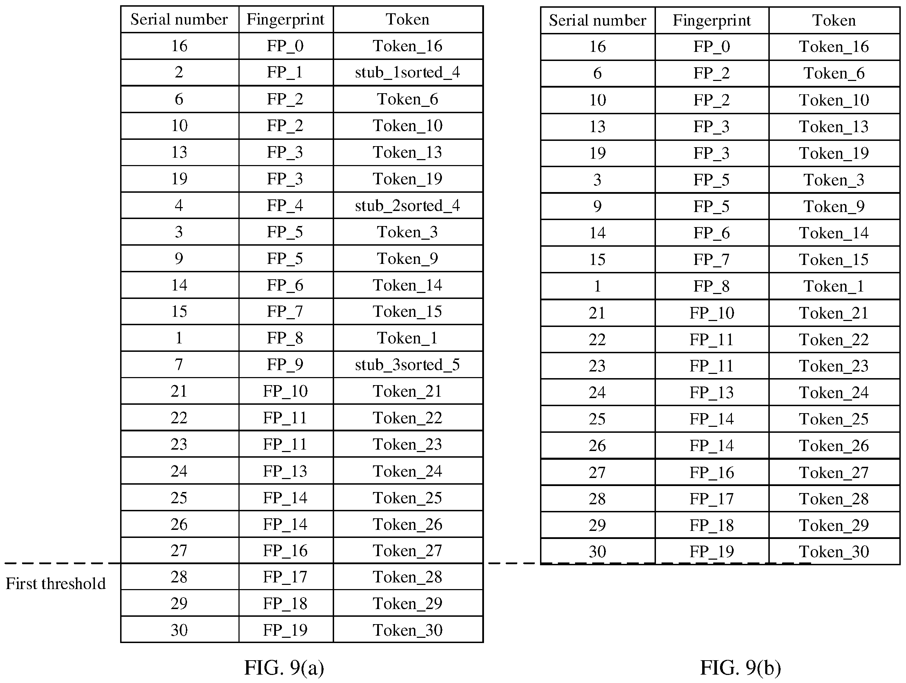

In another example, a time point at which a duplicated fingerprint is determined last time by using a stub of a fingerprint may be recorded in a record item corresponding to the stub. For example, a sorting process in which a duplicated fingerprint is determined by using the stub may be recorded, and may be marked as sorted. As shown in FIG. 9(a), sorted_1 indicates that a duplicated fingerprint is determined by using the stub in a previous sorting process, sorted_2 indicates that a duplicated fingerprint is determined by using the stub in a second sorting process before a current sorting process, and so on. If a serial number carried after sorted in a record item corresponding to a stub is greater than 2, the record item corresponding to the stub may be deleted, to obtain a fingerprint record shown in FIG. 9(b).

### Manner 5:

Any two or more of Manners 1 to 4 may be combined.

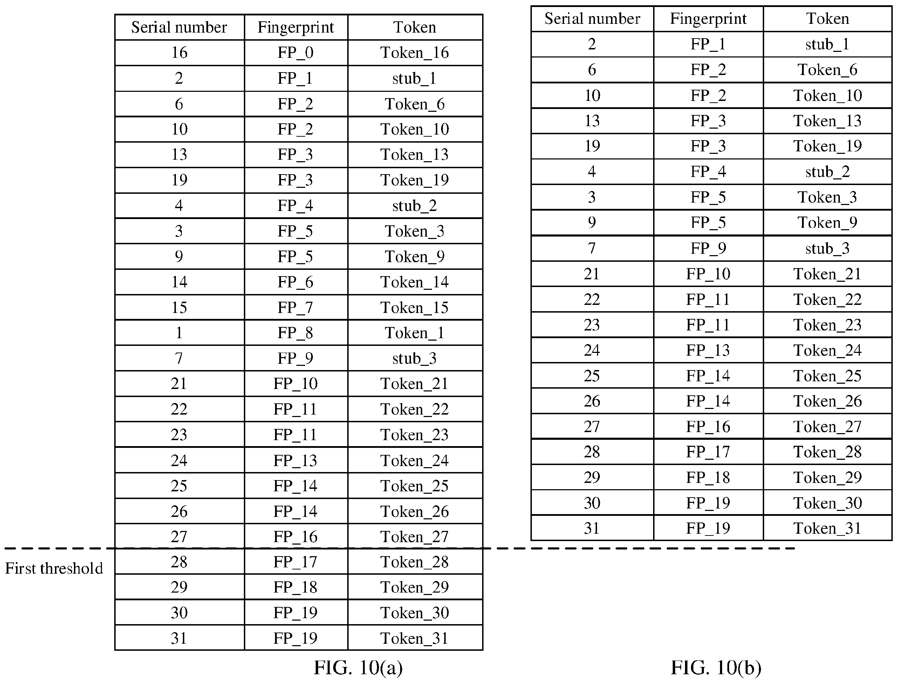

In an example, Manner 1 is combined with Manner 2. In FIG. 10(a), fingerprint record items corresponding to FP_0, FP_6, FP_7, FP_8, FP_10, FP_13, and FP_16 to FP_18 are fingerprint record items corresponding to a fingerprint that occurs once. However, because the fingerprint record items corresponding to FP_10, FP_13, and FP_16 to FP_18 are stored for a short time (because they are written later), only the fingerprint record items corresponding to FP_0, FP_6, FP_7, and FP_8 are deleted, and the fingerprint records corresponding to FP_10, FP_13, and FP_16 to FP_18 are retained, to obtain a fingerprint record shown in FIG. 10(b).

In addition, in this embodiment of this application, after it is determined that the storage space occupied by the fingerprint record is greater than or equal to the first threshold, a storage server may first determine a quantity of fingerprint record items that need to be deleted, and then delete a corresponding quantity of fingerprint record items from the fingerprint record. For example, space occupied by each fingerprint record item is the same. In this case, the storage server may determine a maximum quantity of fingerprint record items that may be stored in the fingerprint record. For example, a maximum of 30 fingerprint record items may be stored. When the quantity of fingerprint record items reaches 33, it may be determined that three fingerprint record items need to be deleted. The three fingerprint record items that need to be deleted are determined based on any one of the foregoing five manners. Therefore, after three fingerprint record items that meet a condition need to be determined, the determined three fingerprint record items may be deleted without traversing the entire fingerprint record. This can improve efficiency.

It should be noted that a fingerprint record item that needs to be deleted may be determined in other manners, which are not illustrated herein.

In the foregoing technical solution, because a stub corresponding to a duplicated fingerprint is added to a fingerprint record item, a fingerprint included in the fingerprint record item may be directly determined as a duplicated fingerprint by using the stub. However, whether a fingerprint is a duplicated fingerprint is determined only after the fingerprint is repeated for a specific quantity of times in the conventional technology. Therefore, in the technical solution, a duplicated fingerprint can be determined quickly, and deduplication can be performed on data corresponding to the duplicated fingerprint. This can improve the efficiency of the deduplication technology.

In addition, it should be noted that, in the embodiment shown in FIG. 2A and FIG. 2B, in the distributed storage system scenario, deduplication is executed by a server of the distributed storage system; and in the storage array scenario, the deduplication is executed by the array controller of the storage array.

In the foregoing embodiments provided in this application, to implement the functions in the method provided in the foregoing embodiments of this application, the storage system may include a hardware structure and/or a software module, to implement the foregoing functions by using the hardware structure, the software module, or a combination of the hardware structure and the software module. Whether a specific function of the foregoing functions is implemented in a manner of a hardware structure, a software module, or a combination of a hardware structure and a software module depends on particular applications and design constraints of the technical solutions.

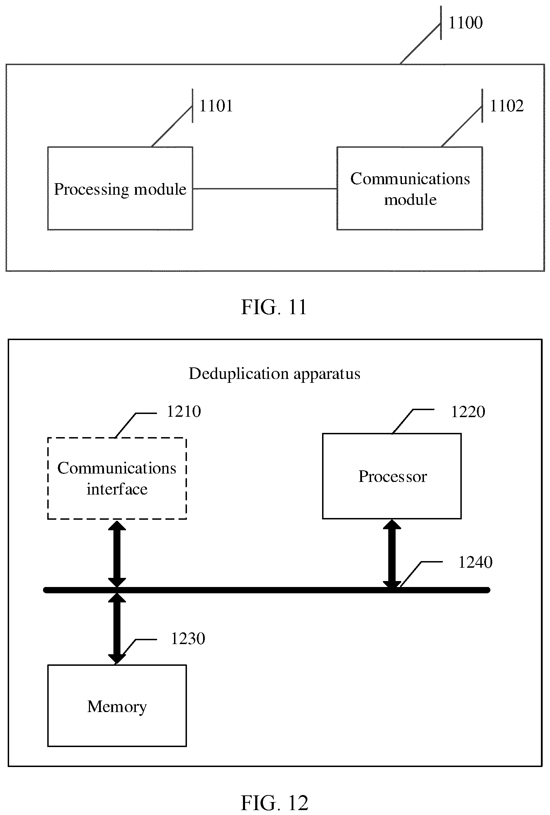

FIG. 11 shows a schematic diagram of a structure of a deduplication apparatus 1100. The deduplication apparatus 1100 may be configured to implement a function of a server of a distributed storage system, or may be configured to implement a function of an array controller in a storage array. The deduplication apparatus 1100 may be a hardware structure, a software module, or a hardware structure combining a software module. The deduplication apparatus 1100 may be implemented by a chip system. In this embodiment of this application, the chip system may include a chip, or may include a chip and another discrete component.

The deduplication apparatus 1100 may include a processing module 1101 and a communications module 1102.

The processing module 1101 may be configured to perform step S201 to S211 in the embodiment shown in FIG. 2A and FIG. 2B, and/or configured to support another process of the technology described in this specification.

The communications module 1102 may be configured to support the communications system in the embodiment shown in FIG. 2A and FIG. 2B to obtain data, and/or be configured to support another process of the technology in this specification. The communications module 1102 is used by the deduplication apparatus 1100 to communicate with another module, and may be a circuit, a component, an interface, a bus, a software module, a transceiver, or any other apparatus that can implement communication.

All related content of the steps in the foregoing method embodiments may be cited in function descriptions of corresponding function modules. Details are not described herein again.

In the embodiment shown in FIG. 11, division into the modules is an example, and is merely logical function division and may be another division manner during actual implementation. In addition, function modules in the embodiments of this application may be integrated into one processor, or each of the modules may exist alone physically, or at least two modules may be integrated into one module. The integrated module may be implemented in a form of hardware, or may be implemented in a form of a software function module.

FIG. 12 shows a deduplication apparatus 1200 according to an embodiment of this application. The deduplication apparatus 1200 may be configured to implement a function of a server of a distributed storage system, or may be configured to implement a function of an array controller in a storage array. The deduplication apparatus 1200 may be a chip system. In this embodiment of this application, the chip system may include a chip, or may include a chip and another discrete component.

The deduplication apparatus 1200 includes at least one processor 1220 configured to implement or support the deduplication apparatus 1200 to implement a function of the storage server in the method provided in the embodiment of this application. For example, the processor 1220 may perform deduplication on newly written data. For details, refer to the detailed description in the method embodiment, and the details are not described herein.

The deduplication apparatus 1200 may further include at least one memory 1230 configured to store program instructions and/or data. The memory 1230 is coupled to the processor 1220. Coupling in the embodiments of this application is an indirect coupling or a communication connection between apparatuses, units, or modules, may be in an electrical, a mechanical, or another form, and is used for information exchange between the apparatuses, the units, or the modules. The processor 1220 may cooperate with the memory 1230. The processor 1220 may execute the program instructions stored in the memory 1230. At least one of the at least one memory may be included in the processor.

The deduplication apparatus 1200 may further include a communications interface 1210 configured to communicate with another device through a transmission medium, so that the deduplication apparatus 1200 can communicate with the another device. For example, the another device may be a storage client or a storage device. The processor 1220 may send and receive data through the communications interface 1210.

This embodiment of this application does not limit a specific connection medium between the communications interface 1210, the processor 1220, and the memory 1230. In this embodiment of this application, the memory 1230, the processor 1220, and the communications interface 1210 are connected through a bus 1240 in FIG. 12. The bus is represented by a thick line in FIG. 12. Such a manner of connection between components is merely an example for description, and imposes no limitation. The bus may be classified into an address bus, a data bus, a control bus, and the like. For ease of representation, only one thick line is used to represent the bus in FIG. 12, but this does not mean that there is only one bus or only one type of bus.

In this embodiment of this application, the processor 1220 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor or any conventional processor or the like. The steps of the method disclosed with reference to the embodiments of this application may be directly performed by using a hardware processor, or may be performed by using a combination of hardware in the processor and a software module.

In this embodiment of this application, the memory 1230 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or data.

An embodiment of this application further provides a computer-readable storage medium including instructions. When the instructions are run on a computer, the computer is enabled to perform the method implemented by the storage server in the embodiment shown in FIG. 2A and FIG. 2B.

An embodiment of this application further provides a computer program product including instructions. When the instructions are run on a computer, the computer is enabled to perform the method implemented by the storage server in the embodiment shown in FIG. 2A and FIG. 2B.

An embodiment of this application provides a chip system. The chip system includes a processor, and may further include a memory, and is configured to implement a function of the storage server in the foregoing method. The chip system may include a chip, or may include a chip and another discrete device.

An embodiment of this application provides a storage system. The storage system includes a storage device and a storage server in the embodiment shown in FIG. 2A and FIG. 2B.

All or some of the foregoing methods in the embodiments of this application may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or the functions according to the embodiments of this application are generated. The computer may be a general-purpose computer, a dedicated computer, a computer network, a network device, user equipment, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

## Claims

1. A deduplication method, comprising:
obtaining a fingerprint record, wherein the fingerprint record comprises a plurality of fingerprint record items, and each fingerprint record item comprises a fingerprint and a storage address of data corresponding to the fingerprint;
determining at least two first fingerprint record items from the fingerprint record, wherein each first fingerprint record item comprises a same first fingerprint and a storage address of data corresponding to the first fingerprint, and storage addresses of data corresponding to first fingerprints of the at least two first fingerprint record items are different;
performing deduplication on the data corresponding to the first fingerprints in the at least two first fingerprint record items;
**characterized in that** the method further comprises:
if the first fingerprint cannot be found in a fingerprint table:
storing the data corresponding to the first fingerprints in a deduplication area to obtain a new storage address of the data corresponding to the first fingerprints; and
establishing a mapping between the first fingerprint and the new storage address in the fingerprint table, wherein the fingerprint table is used to record a mapping between a fingerprint of unique data obtained after deduplication and a storage address of the unique data in the deduplication area; and
deleting the at least two first fingerprint record items; and
recording a stub of the first fingerprint in the fingerprint record, wherein the stub of each fingerprint is used as a record item, information in a token is changed into stub to indicate that the record item is a stub of a fingerprint, and the stub of the first fingerprint is used to indicate that the first fingerprint is a duplicated fingerprint.

2. The method according to claim 1, wherein the method further comprises:
recording a second fingerprint record item in the fingerprint record, wherein the second fingerprint record item comprises the first fingerprint and a new storage address of the data corresponding to the first fingerprint, and the data corresponding to the first fingerprint in the second fingerprint record item is newly written data;
determining, based on the stub of the first fingerprint, that the first fingerprint in the second fingerprint record item is a duplicated fingerprint; and
performing deduplication on the newly written data.

3. The method according to claim 2, wherein the method further comprises:
deleting the second fingerprint record item.

4. The method according to any one of claims 1 to 3, wherein the method further comprises:
deleting a third fingerprint record item when storage space occupied by the fingerprint record is greater than or equal to a first threshold, wherein a fingerprint comprised in the third fingerprint record item is different from fingerprints comprised in other fingerprint record items in the fingerprint record.

5. The method according to any one of claims 1 to 4, wherein the method further comprises:
deleting a fourth fingerprint record item when the storage space occupied by the fingerprint record is greater than or equal to the first threshold, wherein duration of storing the fourth fingerprint record item in the fingerprint record is greater than or equal to a second threshold.

6. The method according to any one of claims 1 to 5, wherein the method further comprises:
when the storage space occupied by the fingerprint record is greater than or equal to the first threshold, determining whether the fingerprint record records a predetermined quantity of third fingerprint record items within a predetermined time period; and
deleting a stub of a second fingerprint in the fingerprint record when the fingerprint record does not record the predetermined quantity of third fingerprint record items within the predetermined time period, wherein the stub of the second fingerprint is used to indicate that the second fingerprint is a duplicated fingerprint, and the third fingerprint record item comprises the second fingerprint.

7. A deduplication apparatus (1100), comprising:
a communications module (1102), configured to obtain a fingerprint record, wherein the fingerprint record comprises a plurality of fingerprint record items, and each fingerprint record item comprises a fingerprint and a storage address of data corresponding to the fingerprint; and
a processing module (1101), configured to: determine at least two first fingerprint record items from the fingerprint record, wherein each first fingerprint record item comprises a same first fingerprint and a storage address of data corresponding to the first fingerprint, and storage addresses of data corresponding to the first fingerprints of the at least two first fingerprint record items are different;
perform deduplication on the data corresponding to the first fingerprints in the at least two first fingerprint record items;
**characterized in that** the processing module (1101) is further configured to:
if the first fingerprint cannot be found in a fingerprint table:
store the data corresponding to the first fingerprints in a deduplication area to obtain a new storage address of the data corresponding to the first fingerprints; and
establish a mapping between the first fingerprint and the new storage address in the fingerprint table, wherein the fingerprint table is used to record a mapping between a fingerprint of unique data obtained after deduplication and a storage address of the unique data in the deduplication area; and
delete the at least two first fingerprint record items; and
record a stub of the first fingerprint in the fingerprint record, wherein the stub of each fingerprint is used as a record item, information in a token is changed into stub to indicate that the record item is a stub of a fingerprint, and the stub of the first fingerprint is used to indicate that the first fingerprint is a duplicated fingerprint.

8. The apparatus (1100) according to claim 7, wherein the processing module (1101) is further configured to:
record a second fingerprint record item in the fingerprint record, wherein the second fingerprint record item comprises the first fingerprint and a new storage address of the data corresponding to the first fingerprint, and the data corresponding to the first fingerprint in the second fingerprint record item is newly written data;
determine, based on the stub of the first fingerprint, that the first fingerprint in the second fingerprint record item is a duplicated fingerprint; and
perform deduplication on the newly written data.

9. The apparatus (1100) according to claim 8, wherein the processing module (1101) is further configured to:
delete the second fingerprint record item.

10. The apparatus (1100) according to any one of claims 7 to 9, wherein the processing module (1101) is further configured to:
delete a third fingerprint record item when storage space occupied by the fingerprint record is greater than or equal to a first threshold, wherein a fingerprint comprised in the third fingerprint record item is different from fingerprints comprised in other fingerprint record items in the fingerprint record.

11. The apparatus (1100) according to any one of claims 7 to 10, wherein the processing module (1101) is further configured to:
delete a fourth fingerprint record item when the storage space occupied by the fingerprint record is greater than or equal to the first threshold, wherein duration of storing the fourth fingerprint record item in the fingerprint record is greater than or equal to a second threshold.

12. The apparatus (1100) according to any one of claims 7 to 11, wherein the processing module (1101) is further configured to:
when the storage space occupied by the fingerprint record is greater than or equal to the first threshold, determine whether the fingerprint record records a predetermined quantity of third fingerprint record items within a predetermined time period; and
delete a stub of a second fingerprint in the fingerprint record when the fingerprint record does not record the predetermined quantity of third fingerprint record items within the predetermined time period, wherein the stub of the second fingerprint is used to indicate that the second fingerprint is a duplicated fingerprint, and the third fingerprint record item comprises the second fingerprint.

13. A computer program product, wherein the computer program product stores instructions, and when the instructions are run on a computer, the computer performs the method according to any one of claims 1 to 6.

## Patentansprüche

1. Deduplizierungsverfahren, das umfasst:
Erhalten eines Fingerabdruckdatensatzes, wobei der Fingerabdruckdatensatz eine Vielzahl von Fingerabdruckdatensatzelementen umfasst und jedes Fingerabdruckdatensatzelement einen Fingerabdruck und eine Speicheradresse von Daten, die dem Fingerabdruck entsprechen, umfasst;
Bestimmen von mindestens zwei ersten Fingerabdruckdatensatzelementen aus dem Fingerabdruckdatensatz, wobei jedes erste Fingerabdruckdatensatzelement einen gleichen ersten Fingerabdruck und eine Speicheradresse von Daten, die dem ersten Fingerabdruck entsprechen, umfasst, und Speicheradressen von Daten, die ersten Fingerabdrücken der mindestens zwei ersten Fingerabdruckdatensatzelemente entsprechen, unterschiedlich sind;
Durchführen einer Deduplizierung an den Daten, die den ersten Fingerabdrücken in den mindestens zwei ersten Fingerabdruckdatensatzelementen entsprechen;
**dadurch gekennzeichnet, dass** das Verfahren ferner umfasst:
falls der erste Fingerabdruck nicht in einer Fingerabdrucktabelle gefunden werden kann:
Speichern der Daten, die den ersten Fingerabdrücken entsprechen, in einem Deduplizierungsbereich, um eine neue Speicheradresse der Daten, die den ersten Fingerabdrücken entsprechen, zu erhalten; und
Erstellen einer Zuordnung zwischen dem ersten Fingerabdruck und der neuen Speicheradresse in der Fingerabdrucktabelle, wobei die Fingerabdrucktabelle verwendet wird, um eine Zuordnung zwischen einem Fingerabdruck eindeutiger Daten, die nach der Deduplizierung erhalten wurden, und einer Speicheradresse der eindeutigen Daten in dem Deduplizierungsbereich aufzuzeichnen; und
Löschen der mindestens zwei ersten Fingerabdruckdatensatzelemente; und
Aufzeichnen eines Stubs des ersten Fingerabdrucks in dem Fingerabdruckdatensatz, wobei der Stub jedes Fingerabdrucks als ein Datensatzelement verwendet wird, Informationen in einem Token in den Stub geändert werden, um anzuzeigen, dass das Datensatzelement ein Stub eines Fingerabdrucks ist, und der Stub des ersten Fingerabdrucks verwendet wird, um anzuzeigen, dass der erste Fingerabdruck ein duplizierter Fingerabdruck ist.

2. Verfahren nach Anspruch 1, wobei das Verfahren ferner umfasst:
Aufzeichnen eines zweiten Fingerabdruckdatensatzelements in dem Fingerabdruckdatensatz, wobei das zweite Fingerabdruckdatensatzelement den ersten Fingerabdruck und eine neue Speicheradresse der Daten, die dem ersten Fingerabdruck entsprechen, umfasst und die Daten, die dem ersten Fingerabdruck entsprechen, in dem zweiten Fingerabdruckdatensatzelement neu geschriebene Daten sind;
Bestimmen, basierend auf dem Stub des ersten Fingerabdrucks, dass der erste Fingerabdruck in dem zweiten Fingerabdruckdatensatzelement ein duplizierter Fingerabdruck ist; und
Durchführen der Deduplizierung an den neu geschriebenen Daten.

3. Verfahren nach Anspruch 2, wobei das Verfahren ferner umfasst: Löschen des zweiten Fingerabdruckdatensatzelements.

4. Verfahren nach einem der Ansprüche 1 bis 3, wobei das Verfahren ferner umfasst: Löschen eines dritten Fingerabdruckdatensatzelements, wenn der Speicherplatz, der durch den Fingerabdruckdatensatz belegt wird, größer als oder gleich einem ersten Schwellenwert ist, wobei ein Fingerabdruck, der in dem dritten Fingerabdruckdatensatzelement umfasst ist, sich von Fingerabdrücken unterscheidet, die in anderen Fingerabdruckdatensatzelementen in dem Fingerabdruckdatensatz umfasst sind.

5. Verfahren nach einem der Ansprüche 1 bis 4, wobei das Verfahren ferner umfasst: Löschen eines vierten Fingerabdruckdatensatzelements, wenn der Speicherplatz, der durch den Fingerabdruckdatensatz belegt wird, größer als oder gleich dem ersten Schwellenwert ist, wobei die Dauer des Speicherns des vierten Fingerabdruckdatensatzelements in dem Fingerabdruckdatensatz größer als oder gleich einem zweiten Schwellenwert ist.

6. Verfahren nach einem der Ansprüche 1 bis 5, wobei das Verfahren ferner umfasst:
wenn der Speicherplatz, der durch den Fingerabdruckdatensatz belegt wird, größer als oder gleich dem ersten Schwellenwert ist, Bestimmen, ob der Fingerabdruckdatensatz eine zuvor bestimmte Menge an dritten Fingerabdruckdatensatzelementen innerhalb eines zuvor bestimmten Zeitraums aufzeichnet; und
Löschen eines Stubs eines zweiten Fingerabdrucks in dem Fingerabdruckdatensatz, wenn der Fingerabdruckdatensatz die zuvor bestimmte Menge an dritten Fingerabdruckdatensatzelementen innerhalb des zuvor bestimmten Zeitraums nicht aufzeichnet, wobei der Stub des zweiten Fingerabdrucks verwendet wird, um anzuzeigen, dass der zweite Fingerabdruck ein duplizierter Fingerabdruck ist, und das dritte Fingerabdruckdatensatzelement den zweiten Fingerabdruck umfasst.

7. Deduplizierungseinrichtung (1100), die umfasst:
ein Kommunikationsmodul (1102), das konfiguriert ist, um einen Fingerabdruckdatensatz zu erhalten, wobei der Fingerabdruckdatensatz eine Vielzahl von Fingerabdruckdatensatzelementen umfasst und jedes Fingerabdruckdatensatzelement einen Fingerabdruck und eine Speicheradresse von Daten, die dem Fingerabdruck entsprechen, umfasst; und
ein Verarbeitungsmodul (1101), das konfiguriert ist zum: Bestimmen von mindestens zwei ersten Fingerabdruckdatensatzelementen aus dem Fingerabdruckdatensatz, wobei jedes erste Fingerabdruckdatensatzelement einen gleichen ersten Fingerabdruck und eine Speicheradresse von Daten, die dem ersten Fingerabdruck entsprechen, umfasst und die Speicheradressen von Daten, die den ersten Fingerabdrücken der mindestens zwei ersten Fingerabdruckdatensatzelemente entsprechen, unterschiedlich sind;
Durchführen der Deduplizierung an den Daten, die den ersten Fingerabdrücken in den mindestens zwei ersten Fingerabdruckdatensatzelementen entsprechen;
**dadurch gekennzeichnet, dass** das Verarbeitungsmodul (1101) ferner konfiguriert ist zum:
falls der erste Fingerabdruck nicht in einer Fingerabdrucktabelle gefunden werden kann:
Speichern der Daten, die den ersten Fingerabdrücken entsprechen, in einem Deduplizierungsbereich, um eine neue Speicheradresse der Daten, die den ersten Fingerabdrücken entsprechen, zu erhalten; und
Erstellen einer Zuordnung zwischen dem ersten Fingerabdruck und der neuen Speicheradresse in der Fingerabdrucktabelle, wobei die Fingerabdrucktabelle verwendet wird, um eine Zuordnung zwischen einem Fingerabdruck eindeutiger Daten, die nach der Deduplizierung erhalten wurden, und einer Speicheradresse der eindeutigen Daten in dem Deduplizierungsbereich aufzuzeichnen; und
Löschen der mindestens zwei ersten Fingerabdruckdatensätze; und
Aufzeichnen eines Stubs des ersten Fingerabdrucks in dem Fingerabdruckdatensatz, wobei der Stub jedes Fingerabdrucks als ein Datensatzelement verwendet wird, Informationen in einem Token in den Stub geändert werden, um anzuzeigen, dass das Datensatzelement ein Stub eines Fingerabdrucks ist, und der Stub des ersten Fingerabdrucks verwendet wird, um anzuzeigen, dass der erste Fingerabdruck ein duplizierter Fingerabdruck ist.

8. Einrichtung (1100) nach Anspruch 7, wobei das Verarbeitungsmodul (1101) ferner konfiguriert ist zum:
Aufzeichnen eines zweiten Fingerabdruckdatensatzelements in dem Fingerabdruckdatensatz, wobei das zweite Fingerabdruckdatensatzelement den ersten Fingerabdruck und eine neue Speicheradresse der Daten, die dem ersten Fingerabdruck entsprechen, umfasst und die Daten, die dem ersten Fingerabdruck entsprechen, in dem zweiten Fingerabdruckdatensatzelement neu geschriebene Daten sind;
Bestimmen, basierend auf dem Stub des ersten Fingerabdrucks, dass der erste Fingerabdruck in dem zweiten Fingerabdruckdatensatzelement ein duplizierter Fingerabdruck ist; und
Durchführen der Deduplizierung an den neu geschriebenen Daten.

9. Einrichtung (1100) nach Anspruch 8, wobei das Verarbeitungsmodul (1101) ferner konfiguriert ist zum:
Löschen des zweiten Fingerabdruckdatensatzelements.

10. Einrichtung (1100) nach einem der Ansprüche 7 bis 9, wobei das Verarbeitungsmodul (1101) ferner konfiguriert ist zum:
Löschen eines dritten Fingerabdruckdatensatzelements, wenn der Speicherplatz, der durch den Fingerabdruckdatensatz belegt wird, größer als oder gleich einem ersten Schwellenwert ist, wobei ein Fingerabdruck, der in dem dritten Fingerabdruckdatensatzelement umfasst ist, sich von Fingerabdrücken unterscheidet, die in anderen Fingerabdruckdatensatzelementen in dem Fingerabdruckdatensatz umfasst sind.

11. Einrichtung (1100) nach einem der Ansprüche 7 bis 10, wobei das Verarbeitungsmodul (1101) ferner konfiguriert ist zum:
Löschen eines vierten Fingerabdruckdatensatzelements, wenn der Speicherplatz, der durch den Fingerabdruckdatensatz belegt wird, größer als oder gleich dem ersten Schwellenwert ist, wobei die Dauer des Speicherns des vierten Fingerabdruckdatensatzelements in dem Fingerabdruckdatensatz größer als oder gleich einem zweiten Schwellenwert ist.

12. Einrichtung (1100) nach einem der Ansprüche 7 bis 11, wobei das Verarbeitungsmodul (1101) ferner konfiguriert ist zum:
wenn der Speicherplatz, der durch den Fingerabdruckdatensatz belegt wird, größer als oder gleich dem ersten Schwellenwert ist, Bestimmen, ob der Fingerabdruckdatensatz eine zuvor bestimmte Menge an dritten Fingerabdruckdatensatzelementen innerhalb eines zuvor bestimmten Zeitraums aufzeichnet; und
Löschen eines Stubs eines zweiten Fingerabdrucks in dem Fingerabdruckdatensatz, wenn der Fingerabdruckdatensatz die zuvor bestimmte Menge an dritten Fingerabdruckdatensatzelementen innerhalb des zuvor bestimmten Zeitraums nicht aufzeichnet, wobei der Stub des zweiten Fingerabdrucks verwendet wird, um anzuzeigen, dass der zweite Fingerabdruck ein duplizierter Fingerabdruck ist, und das dritte Fingerabdruckdatensatzelement den zweiten Fingerabdruck umfasst.

13. Computerprogrammprodukt, wobei das Computerprogrammprodukt Anweisungen speichert, und wenn die Anweisungen auf einem Computer ablaufen, der Computer das Verfahren nach einem der Ansprüche 1 bis 6 durchführt.

## Revendications

1. Procédé de déduplication, comprenant :
l'obtention d'un relevé d'empreintes digitales, dans lequel le relevé d'empreintes digitales comprend une pluralité d'éléments de relevé d'empreintes digitales, et chaque élément de relevé d'empreintes digitales comprend une empreinte digitale et une adresse de stockage de données correspondant à l'empreinte digitale ;
la détermination d'au moins deux premiers éléments de relevé d'empreintes digitales à partir du relevé d'empreintes digitales, dans lequel chaque premier élément de relevé d'empreintes digitales comprend une même première empreinte digitale et une adresse de stockage de données correspondant à la première empreinte digitale, et des adresses de stockage de données correspondant aux premières empreintes digitales des au moins deux premiers éléments de relevé d'empreintes digitales sont différentes ;
la réalisation d'une déduplication sur les données correspondant aux premières empreintes digitales dans les au moins deux premiers éléments de relevé d'empreintes digitales ;
**caractérisé en ce que** le procédé comprend en outre :
si la première empreinte digitale ne peut être trouvée dans une table d'empreintes digitales :
le stockage des données correspondant aux premières empreintes digitales dans une zone de déduplication afin d'obtenir une nouvelle adresse de stockage des données correspondant aux premières empreintes digitales ; et
l'établissement d'une correspondance entre la première empreinte digitale et la nouvelle adresse de stockage dans la table d'empreintes digitales, dans lequel la table d'empreintes digitales est utilisée pour enregistrer une correspondance entre une empreinte digitale de données uniques obtenue après déduplication et une adresse de stockage des données uniques dans la zone de déduplication ; et
la suppression des au moins deux premiers éléments de relevé d'empreintes digitales ; et
l'enregistrement d'un élément de remplacement de la première empreinte digitale dans le relevé d'empreintes digitales, dans lequel l'élément de remplacement de chaque empreinte digitale est utilisé comme élément de relevé, des informations dans un jeton sont transformées en élément de remplacement pour indiquer que l'élément de relevé est un élément de remplacement d'empreinte, et l'élément de remplacement de la première empreinte digitale est utilisé pour indiquer que la première empreinte digitale est une empreinte digitale dupliquée.

2. Procédé selon la revendication 1, dans lequel le procédé comprend en outre :
l'enregistrement d'un deuxième élément de relevé d'empreintes digitales dans le relevé d'empreintes digitales, dans lequel le deuxième élément de relevé d'empreintes digitales comprend la première empreinte digitale et une nouvelle adresse de stockage des données correspondant à la première empreinte digitale, et les données correspondant à la première empreinte digitale dans le deuxième élément de relevé d'empreintes digitales sont des données nouvellement écrites ;
le fait de déterminer, sur la base de l'élément de remplacement de la première empreinte digitale, que la première empreinte digitale dans le deuxième élément de relevé d'empreintes digitales est une empreinte digitale dupliquée ; et
la réalisation d'une déduplication sur les données nouvellement écrites.

3. Procédé selon la revendication 2, dans lequel le procédé comprend en outre :
la suppression du deuxième élément de relevé d'empreintes digitales.

4. Procédé selon l'une quelconque des revendications 1 à 3, dans lequel le procédé comprend en outre :
la suppression d'un troisième élément de relevé d'empreintes digitales lorsqu'un espace de stockage occupé par le relevé d'empreintes digitales est supérieur ou égal à un premier seuil, dans lequel une empreinte digitale comprise dans le troisième élément de relevé d'empreintes digitales est différente d'empreintes digitales comprises dans d'autres éléments de relevé d'empreintes digitales dans le relevé d'empreintes digitales.

5. Procédé selon l'une quelconque des revendications 1 à 4, dans lequel le procédé comprend en outre :
la suppression d'un quatrième élément de relevé d'empreintes digitales lorsque l'espace de stockage occupé par le relevé d'empreintes digitales est supérieur ou égal au premier seuil, dans lequel une durée de stockage du quatrième élément de relevé d'empreintes digitales dans le relevé d'empreintes digitales est supérieure ou égale à un second seuil.

6. Procédé selon l'une quelconque des revendications 1 à 5, dans lequel le procédé comprend en outre :
lorsque l'espace de stockage occupé par le relevé d'empreintes digitales est supérieur ou égal au premier seuil, le fait de déterminer si le relevé d'empreintes digitales enregistre une quantité prédéterminée de troisièmes éléments de relevé d'empreintes digitales au cours d'une période de temps prédéterminée ; et
la suppression d'un élément de remplacement d'une seconde empreinte digitale dans le relevé d'empreintes digitales lorsque le relevé d'empreintes digitales n'enregistre pas la quantité prédéterminée de troisièmes éléments de relevé d'empreintes digitales au cours de la période de temps prédéterminée, dans lequel l'élément de remplacement de la seconde empreinte est utilisé pour indiquer que la seconde empreinte digitale est une empreinte digitale dupliquée, et que le troisième élément de relevé d'empreintes digitales comprend la seconde empreinte digitale.

7. Appareil de déduplication (1100), comprenant :
un module de communications (1102), configuré pour obtenir un relevé d'empreintes digitales, dans lequel le relevé d'empreintes digitales comprend une pluralité d'éléments de relevé d'empreintes digitales, et chaque élément de relevé d'empreintes digitales comprend une empreinte digitale et une adresse de stockage de données correspondant à l'empreinte digitale ; et
un module de traitement (1101), configuré pour : déterminer au moins deux premiers éléments de relevé d'empreintes digitales à partir du relevé d'empreintes digitales, dans lequel chaque premier élément de relevé d'empreintes digitales comprend une même première empreinte digitale et une adresse de stockage de données correspondant à la première empreinte digitale, et des adresses de stockage de données correspondant aux premières empreintes digitales des au moins deux premiers éléments de relevé d'empreintes digitales sont différentes ;
la réalisation d'une déduplication sur les données correspondant aux premières empreintes digitales dans les au moins deux premiers éléments de relevé d'empreintes digitales ;
**caractérisé en ce que** le module de traitement (1101) est en outre configuré pour :
si la première empreinte digitale ne peut être trouvée dans une table d'empreintes digitales :
stocker les données correspondant aux premières empreintes digitales dans une zone de déduplication afin d'obtenir une nouvelle adresse de stockage des données correspondant aux premières empreintes digitales ; et
établir une correspondance entre la première empreinte digitale et la nouvelle adresse de stockage dans la table d'empreintes digitales, dans lequel la table d'empreintes digitales est utilisée pour enregistrer une correspondance entre une empreinte digitale de données uniques obtenue après déduplication et une adresse de stockage des données uniques dans la zone de déduplication ; et
supprimer les au moins deux premiers éléments de relevé d'empreintes digitales ; et
enregistrer un élément de remplacement de la première empreinte digitale dans le relevé d'empreintes digitales, dans lequel l'élément de remplacement de chaque empreinte digitale est utilisé comme élément de relevé, des informations dans un jeton sont transformées en élément de remplacement pour indiquer que l'élément de relevé est un élément de remplacement d'une empreinte digitale, et l'élément de remplacement de la première empreinte digitale est utilisé pour indiquer que la première empreinte digitale est une empreinte digitale dupliquée.

8. Appareil (1100) selon la revendication 7, dans lequel le module de traitement (1101) est en outre configuré pour :
enregistrer un deuxième élément de relevé d'empreintes digitales dans le relevé d'empreintes digitales, dans lequel le deuxième élément de relevé d'empreintes digitales comprend la première empreinte digitale et une nouvelle adresse de stockage des données correspondant à la première empreinte digitale, et les données correspondant à la première empreinte digitale dans le deuxième élément de relevé d'empreintes digitales sont des données nouvellement écrites ;
déterminer, sur la base de l'élément de remplacement de la première empreinte digitale, que la première empreinte digitale du deuxième élément de relevé d'empreintes digitales est une empreinte digitale dupliquée ; et
réaliser une déduplication sur les données nouvellement écrites.

9. Appareil (1100) selon la revendication 8, dans lequel le module de traitement (1101) est en outre configuré pour :
supprimer le deuxième élément de relevé d'empreintes digitales.

10. Appareil (1100) selon l'une quelconque des revendications 7 à 9, dans lequel le module de traitement (1101) est en outre configuré pour :
supprimer un troisième élément de relevé d'empreintes digitales lorsqu'un espace de stockage occupé par le relevé d'empreintes digitales est supérieur ou égal à un premier seuil, dans lequel une empreinte digitale comprise dans le troisième élément de relevé d'empreintes digitales est différente des empreintes digitales comprises dans d'autres éléments de relevé d'empreintes digitales du relevé d'empreintes digitales.

11. Appareil (1100) selon l'une quelconque des revendications 7 à 10, dans lequel le module de traitement (1101) est en outre configuré pour :
supprimer un quatrième élément de relevé d'empreintes digitales lorsque l'espace de stockage occupé par le relevé d'empreintes digitales est supérieur ou égal au premier seuil, dans lequel la durée de stockage du quatrième élément de relevé d'empreintes digitales dans le relevé d'empreintes digitales est supérieure ou égale à un second seuil.

12. Appareil (1100) selon l'une quelconque des revendications 7 à 11, dans lequel le module de traitement (1101) est en outre configuré pour :
lorsque l'espace de stockage occupé par le relevé d'empreintes digitales est supérieur ou égal au premier seuil, déterminer si le relevé d'empreintes digitales enregistre une quantité prédéterminée de troisièmes éléments de relevé d'empreintes digitales au cours d'une période de temps prédéterminée ; et
supprimer un élément de remplacement d'une seconde empreinte digitale dans le relevé d'empreintes digitales lorsque le relevé d'empreintes digitales n'enregistre pas la quantité prédéterminée de troisièmes éléments de relevé d'empreintes digitales au cours de la période de temps prédéterminée, dans lequel l'élément de remplacement de la seconde empreinte digitale est utilisé pour indiquer que la seconde empreinte digitale est une empreinte digitale dupliquée, et que le troisième élément de relevé d'empreintes digitales comprend la seconde empreinte digitale.

13. Produit-programme d'ordinateur, dans lequel le produit-programme d'ordinateur stocke des instructions, et lorsque les instructions sont exécutées sur un ordinateur, l'ordinateur réalise le procédé selon l'une quelconque des revendications 1 à 6.
